# NEW EUROPEAN PATENT SPECIFICATION

(11) **EP 2 933 134 B2**
(45) Date of publication and mention of the opposition decision: **10.01.2024**
(45) Mention of the grant of the patent: 20.03.2019
(21) Application number: 15001103.9
(22) Date of filing: 16.04.2015
(51) Int. Cl.: B60N 2/28

(54) **MOTOR CAR CHAIR FOR A CHILD**
KRAFTFAHRZEUGSITZ FÜR EIN KIND
CHAISE DE VOITURE AUTOMOBILE POUR UN ENFANT

(30) Priority: 18.04.2014 PL 40795414
(43) Date of publication of application: 21.10.2015
(73) Proprietor: Karwala, Lukasz, 42-130 Wreczyca Wielka (PL)
(72) Inventor: Karwala, Lukasz, 42-130 Wreczyca Wielka (PL)
(74) Representative: Budzinski, Slawomir

(56) References cited:
- EP-A1- 1 623 892
- EP-A1- 2 147 818
- EP-A1- 2 769 876
- EP-A2- 2 228 253
- WO-A1-2004/002773
- WO-A1-2004/002773
- US-A1- 2011 006 572
- US-A1- 2012 261 961
- US-A1- 2012 261 961
- US-B1- 6 183 044
- US-B1- 6 375 260
- US-B1- 6 428 099
- R129e Ru140109

## Description

It is the object of the invention to provide a motor car chair for a child, to be fastened on the bottom seat of a car seat.

Known are motor car chairs for a child, mounted on a bottom seat of a motor car, comprising a bottom seat, i.e. a chair shell, fastened to a base which is a base mounted on a car seat by means of clamping systems that clamp the chair shell to the base. The base is fastened on a car seat by means of the isofix system, car seat belts or in some other way. The chair shell may be detached from the base and this operation does not require disassembling of the base from the car seat. The child is supported in the chair shell by means of internal belts - mounted to the chair shell.

A motor car chair for a child is known as presented in patent document CA 2558978. The chair comprises: a bottom seat frame with a backrest with a slot for internal seat belts of the chair that limit the seat occupied by a child, a bottom seat frame comprising an energy-absorbing element operationally connected to the slot so as to reduce the amount of force of the internal belt affecting the child occupying the chair during sudden braking. In the invention several slots are contemplated in the chair frame through which slots the internal belt may be threaded.

An seat for a child is known to be used in vehicles as presented in patent document EP 1059194. It comprises a chair body with a first and second side surfaces, where the first abutting surface extends between the side surfaces and is arranged to abut the cushion of the bottom seat of the car seat, while the other abutting surface extends between the side surfaces and is arranged to abut the backrest of the car vehicle seat.

A motor car chair for a child is known intended for small infants, as presented in patent document EP 1470952. The chair comprises a frame mounted on the bottom seat of a vehicle seat and a rear bracket which may be rotated relative to the frame. The seat of the vehicle comprises a part that constitutes a bottom seat and a backrest. The lower part of the rear chair bracket positioned at the frame is movable relative to the frame, in the directions towards and from the rear part of the vehicle. The rear bracket is upright in a first position where at the lower part of the rear bracket it is located near the rear part of the vehicle and it is inclined in a second position where at the lower part of the rear bracket it is spaced from the rear part of the vehicle.

A securing frame is known for a motor car seat for a child, as presented in patent document EP 1517810. The frame is provided with anchoring elements connected to the chair and rigidly coupled with the base and/or the bottom seat of the vehicle seat. The anchoring elements may be released from the coupling with the anchoring elements of the infant chair affixed to the vehicle by means of links connected together with a transverse bar and the latter is coupled with a pulling handle for detachment.

A motor car chair is known as presented in patent document FR 2957313. The chair is provided with a footing integrated with a vehicle seat in one mounting position. The chair along with a base and backrest takes a front or rear position relative to the footing. Pairs of two fastening elements are arranged symmetrically in a manner that one pair of first fastening elements interacts with a second pair of first fastening elements in a position oriented backwards relative to the direction of driving, where the second pair of first fastening elements interacts with the first pair of second fastening elements.

A child vehicle seat is known from patent document US 6,428,099 B1 detachably coupled to a base adapted to rest on a seat in a vehicle. This seat is adjustable to an upright or reclining position. This seat includes a release mechanism coupled to an underside of seat shell, which mechanism serves for releasable coupling of the seat to the base. In this mechanism, side walls comprise slots within which a release rod is movable, which release rod constitutes an engaging element or a release element of the release mechanism.

A system is known for holding a child in a chair as presented in patent document US 5567008. The system comprises a base mounted to a motor car seat and a carrycot for an infant, comprising a chair shell assembled with the base by means of a clamp arm. The clamp arm is movable so as to disengage the shell from the base, and for this purpose a release button mounted on the shell is provided.

A system is known for coupling a carrycot for infants to another device that constitutes a base, as presented in patent document US 5772279. The system comprises a carrycot that comprises coupling means extending from a side of the carrycot, and the coupling means form mounting pockets. The devices that constitute the base, such a pram or a vehicle chair, have coupling posts arranged for the mounting pockets of the carrycot.

A chair for a child is further known to be mounted on a motor car seat as presented in patent document US 6592183. The chair comprises a first pair of apertures and a second pair of apertures. The vehicle anchoring system comprises an anchoring system for coupling a pair of anchoring mounting elements used in the vehicle seat or in the vicinity thereof. The vehicle anchoring system comprises a securing belt that has a central part and opposite end parts as well as a fastener coupled with each of the end parts, arranged to couple one of the mounting elements. The vehicle anchoring system also comprises a leash coupled with the chair and the central part of the securing belt. The leash remains coupled with the chair and the securing belt, while the securing belt is moved between the first and second aperture of the chair.

A motor car chair is known as presented in patent document US 6428099. The car vehicle chair for a child is releasably mounted to the base adapted for a motor car seat. The chair may be positioned in an upright or inclined position, and additionally it may comprise a compartment for housing small accessories.

A motor car chair is known as presented in patent document US 6692073. This is a chair/carrycot for an infant arranged in a motor car so as to enable swinging thereof.

A motor car chair is known as presented in patent document US 2007176477. This is an infant chair where the harness for holding the infant is fastened relative to the vehicle through a mounting system independent of any chair framework. Preferably, the chair itself is mounted to a motor car seat. There is also disclosed a set with a chair structure that has a slot through which internal belts may be threaded which constitute the harness. The harness, advantageously, comprises an internal main belt which is looped behind the chair through a pair of slots so as to provide surrounding the infant with two internal shoulder belts. Multiple pairs of slots provide a possibility to change the height of the internal shoulder belts. The chair is fastened with the internal belts to the vehicle seat. This set has no chair base. The chair has an additional internal belt loop that holds the chair.

There is known a lower anchoring connection for fastening an infant chair to anchoring clamps of a vehicle, as presented in patent document US 2010033001. In this connection, a single drawing in element comprises an extendable arm connected with an internal belt of the chair that has at its opposite ends coupling elements to lock anchoring loops. A release button on the drawing in element, upon being pressed, enables retraction of the arm of the drawing in element when maintaining the coupling elements in the vicinity of the infant chair in a storage position.

There is known a motor car chair for a child to be mounted on a bottom seat of a motor car seat presented in the Polish patent application P.402917. The motor car chair has a base where clamping catches are positioned, and a shell bottom seat. The bottom seat has internal belts for a child, having two shoulder segments extending in the space of the bottom seat intended for a child and passing to the other side of the bottom seat and there connected to a tensioning belt passing through a tensioner, and in the space of the bottom seat intended for a child it has a connecting crotch element provided with a clamp for internal belts. The fastening part of the connecting crotch element is provided with a handle, positioned at the opposite side of the bottom seat relative to the side of the bottom seat intended for a child, and the belt tensioner of the chair is provided with a connector. The handle of the fastening element of the connecting crotch element and the tensioner connector are coupled with clamp catches of the chair base, after the bottom seat is set on the base. The chair base is mounted to a motor car seat by means of an isofix system or by means of safety belts the motor car is equipped with. The clamp catches have claw elements that are rotatable on shafts, and are released by springs. The tensioner connector and the handle of the fastening element of the crotch belt have a cross-section that cooperates with clamp catches of a circular shape. The chair base is provided with longitudinal side channels, where a central part thereof, at the side, corresponding to the bottom seat backrest, has a protrusion of a cylinder-like shape the axis of which extends transversely to the longitudinal axis of the base. The bottom seat of the chair is provided with longitudinal rails and a recess in a cylinder-like shape the axis of which extends transversely to the longitudinal axis of the bottom seat. The longitudinal rails of the bottom seat enter channels of the base and the protrusion of the base enters the recess of the bottom seat upon seating the bottom seat in the chair base.

In the known solutions for motor car chairs for a child, mounted on a motor car seat, with the exception of the chair presented in the application P.402917, the force of inertia acting on a child during an accident is transferred to the internal belts, then to the chair shell, next to the base and only then to the structure of the vehicle.

It is the purpose of this invention to provide a chair where the path of transfer of the force of inertia, during an accident, is shorter, and thus safety of the child being carried is enhanced and mounting of the bottom seat with a child in the base of the chair is very simple and at the same time completely safe.

A motor car chair for a child, according to the invention, is mounted on a motor car seat. It has a base with a clamping catch and a shell bottom seat which has internal belts for the child, having two shoulder segments extending in the space of the bottom seat intended for the child and passing to the other side of the bottom seat and there connected to a tensioning belt passing through a tensioner. In the space of the bottom seat intended for a child there is a connecting crotch element provided with a clamp for internal belts. The shell bottom seat is provided with a longitudinal bracket extending along the longitudinal axis of the shall of the bottom seat. The bracket is provided with a connector, into the bracket the connecting crotch element and the tensioner are connected, and the base has at least one clamping catch the bracket connector is coupled with when the bottom seat is seated in the base.

Preferably, the connector is positioned at one end of the bracket and is coupled with a connecting crotch element with a clamp for internal belts of a chair, wherein the other end of the bracket is coupled with a tensioner of the tensioning belt of the chair.

Also preferably, the connector is positioned at one end of the bracket and is coupled with a tensioner of the tensioning belt of a chair, wherein the other end of the bracket is coupled with a connecting crotch element with a clamp for the tensioning belt of the chair.

Also preferably, the connector is positioned between one end of the bracket and the other end of the bracket, wherein at one end of the bracket a connecting crotch element with a clamp for internal belts of a chair is positioned, and at the other end of the bracket a tensioner of the tensioning belt of a chair is positioned.

Also preferably, the connector is positioned in the bracket and is coupled with a connecting crotch element with a clamp for internal belts of a chair, wherein the connecting crotch element is set on the common axis with a tensioner of the tensioning belt of the chair.

Also preferably, the base is provided with at least one hook fastening element and the shell bottom seat has at least one mounting recess, into which a hook fastening element enters during setting the shell bottom seat in the base.

Also preferably, the base of a chair is mounted to the motor car seat by means of an isofix system device.

Also preferably, the base of a chair is mounted to the motor car seat by means of the motor car safety belts.

Also preferably, the connecting crotch element is a belt.

Also preferably, the clamping catch has a claw element rotatable on a shaft and is released by a spring and the connector has in the cross-section that cooperates with a clamping catch a circular shape.

Also preferably, the base of the chair is provided with longitudinal side channels and the central part thereof at the side corresponding to the backrest of the bottom seat is provided with a protrusion of a cylinder-like shape the axis of which extends transversely to the longitudinal axis of the base, and the bottom seat of the chair is provided with longitudinal rails and with a recess of a cylinder-like shape the axis of which extends transversely to the longitudinal axis of the bottom seat, wherein the longitudinal rails of the bottom seat enter the channels of the base and the protrusion of the base enters the recess of the bottom seat upon setting the bottom seat on the base of the chair.

The object of the invention is presented in its embodiments in the drawing, where Fig. 1 shows a motor car chair for a child in an exploded side view in an embodiment where the connector of the bracket is positioned at the end of the bracket to which the connecting crotch element is fastened; Fig. 2 shows a motor car chair for a child in an exploded side view in an embodiment where the connector of the bracket is positioned at the end of the bracket to which a tensioner of the tensioning belt is fastened; Fig. 3 shows in a perspective view a bracket in which the connector is positioned at the opposite end of the tensioner relative to the tensioning belt; Fig. 4 shows in a perspective view a bracket in which the connector is positioned on the same axis that the tensioner of the tensioning belt; Fig. 5 shows a cross-section of a segment of the chair illustrating fastening of a bracket connector in a catch of the bottom seat.

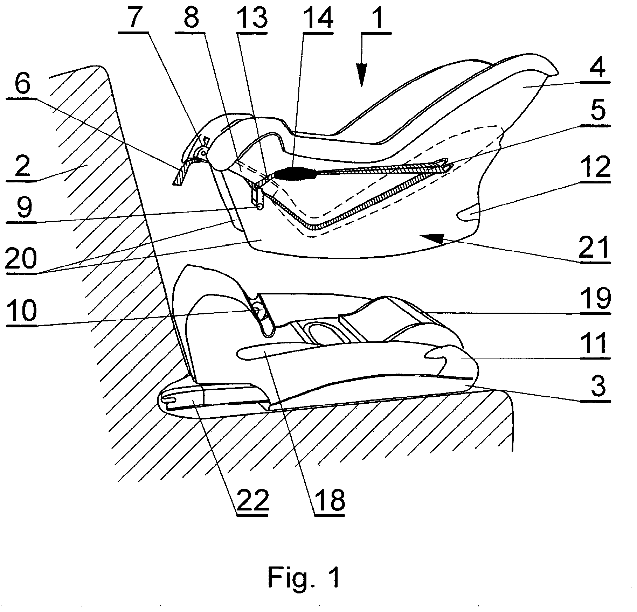

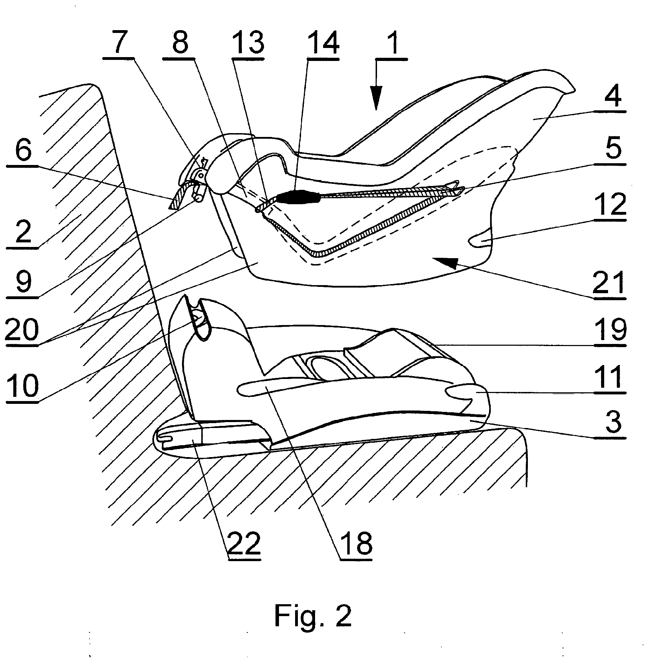

A motor car chair 1 is intended to be mounted on a car seat 2. As shown in the embodiments in Fig. 1 and Fig. 2, a chair 1 comprises a base 3 and a bottom seat 4. It is provided with internal belts 5 for a child, where two shoulder segments extend in a bottom seat space 4, intended for a child and pass to the other side of the bottom seat 4 where they are connected with a tensioning belt 6 threaded through a tensioner 7. The bottom seat 4 is provided with a longitudinal bracket 8 extending along the longitudinal axis of the shell of the bottom seat 4. The bracket 8 is provided with a connector 9 and the base 3 has a clamping catch 10. Upon setting the bottom seat 4 in the base 3, the connector 9 of the bracket 8 is coupled with a clamping catch 10. In this embodiment, the base 3 is provided with two hook fastening elements 11 positioned one at each side of the front side of the base 3 and the shell bottom seat has mounting recesses 12 into which the hook fastening elements 11 enter upon setting the shell bottom seat in the base 3.

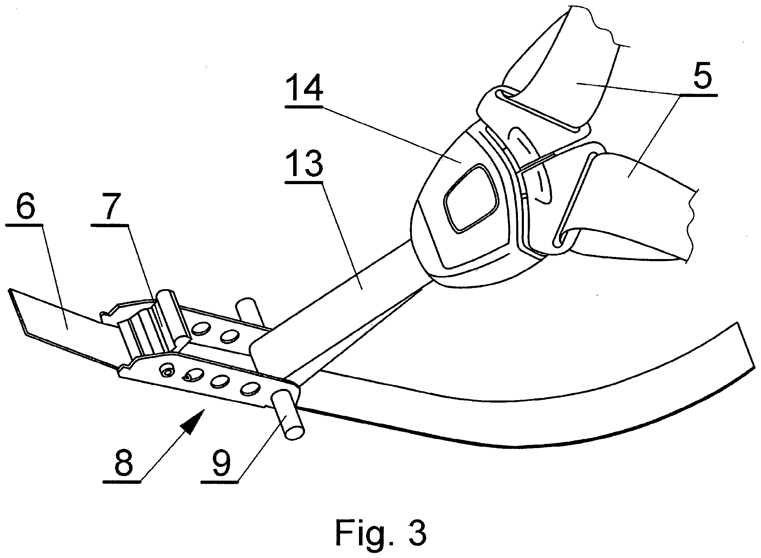

In the first embodiment, as shown in Fig. 1 and Fig. 3, the connector 9 is set at the end of the bracket 8 which is coupled with the connecting crotch element 13 with a clamp 14 of internal belts 5 of the chair 1. The other end of the bracket 8 is coupled with a tensioner 7 of the tensioning belt 6 of the chair 1.

In a second embodiment, as shown on Fig. 2, a connector 9 is positioned at the end of the bracket 8 at which a tensioner 7 of the tensioning belt 6 is fastened, and the other end of the bracket 8 is coupled with a connecting crotch element 13 with a clamp 14 for of internal belts 5 of the chair 1.

Of course, it is possible to position the connector 9 at any place between one end of the bracket 8 where the connecting crotch element 13 with a clamp 14 for internal belts 5 of the chair 1 is positioned and the other end of the bracket 8 where the tensioner of the tensioning belt 6 of the chair 1 is positioned.

As shown for example in Fig. 3 the bracket 8 can have a C-beam profile and at the internal central surface thereof the tensioning belt 6 extends. The side surfaces of the profile of the bracket 8 constitute elements for fastening the connector 9, the tensioner 7 of the tensioning belt 6 and the connecting crotch element 13 with a clamp 14 for the internal belts 5 of the chair 1. In the embodiment shown in Fig. 3 the connector 9 is positioned at the same end of the bracket 8 that the connecting crotch element 13, and at the opposite end of the bracket 8 a tensioner 7 of the tensioning belt 6 is fastened. The connecting crotch element 13 in this example is a belt.

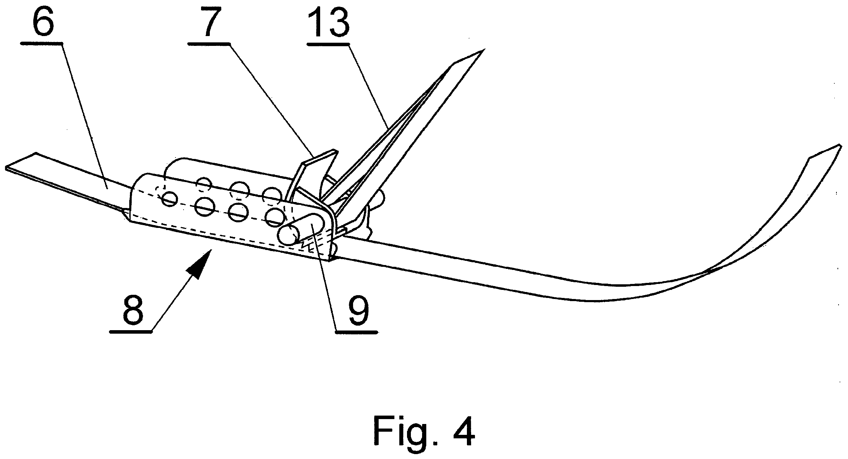

In another embodiment, as shown in Fig. 4, the connector 9 is positioned in the bracket 8 and coupled with the connecting crotch element 13 with a clamp 14 for internal belts 5 of the chair 1, and the connecting crotch element 13 is set on the common axis with the tensioner 7 of the tensioning belt 6 of the chair 1. In this case the length of the bracket 8 can be significantly reduced.

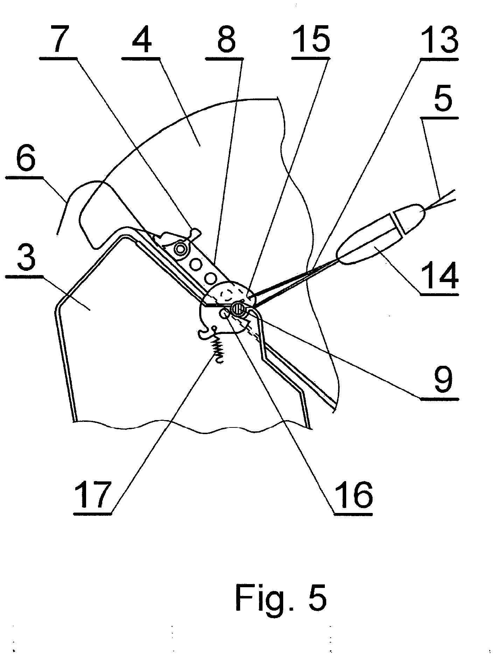

As shown in fig. 5, the clamping catch 10 has a claw element 15 rotatable on a shaft 16 and is released by a spring 17. The connector 9 has in cross-section that cooperates with the clamping catch 10 a circular shape.

The connector 9 in the embodiments shown in Fig. 3, Fig. 4, Fig. 5 has a form of a pin in a shape of a cylinder on which a connecting crotch element 13 positioned centrally. In this case there are two clamping catches 10 in the base 3 corresponding to the ends of the connector protruding outside the brackets 8. In the embodiments shown in Fig. 1 and Fig. 2 the connector 9 has a form of a chain link consisting of two parallel cylindrical bar sections coupled with pieces of flat sheet. In these embodiments the basis is provided with one clamping catch 10. Of course, the connector 9 can have numerous different forms, for example it can be made of one piece of a bar bent into a shape of a rectangular chain.

The basis 3 of the chair 1, as shown in Fig. 1 and Fig. 2, is provided with longitudinal side channels 18, and the central part thereof at the side corresponding to the backrest of the bottom seat 4 is provided with a protrusion 19 in a cylinder-like shape which axis extends transversely to the longitudinal axis of the base 3, and the bottom seat 4 of the chair 1 is provided with longitudinal rails 20 and a recess 21 of a cylinder-like shape the axis of which extends transversely to the longitudinal axis of the bottom seat 4, wherein the longitudinal rails 20 of the bottom seat 4 enter the channels 18 of the base 3 and the protrusion 19 of the base 3 enters the recess 21 of the bottom seat 4 during setting the bottom seat 4 on the base 3 of the chair 1. The base 3 of the chair 1 is mounted to the motor car seat 2 by means of an isofix system device 22.

The base 3 of the chair 1 can be of course mounted to the motor car seat 2 by means of the motor car safety belts or other technical means.

After a child is seated on the bottom seat 4 of the chair 1 and after fastening the internal belts 5 to the clamp 14 connected to the connecting crotch element 13, the internal belts 5 are tensioned by means of tensioning of the tensioning belt 6 and its position is secured by the tensioner 7. As shown in Fig. 1 and Fig. 2, mounting of the bottom seat 4 of the chair 1 to the base is effected with the use of a connector 9 of the bracket 8 with which the bottom seat 4 is provided and a corresponding clamping catch 10 in the base 3 of the chair 1 as well as hook elements 11 in the base 3 and corresponding recesses 12 arranged in the bottom seat 4. The connector 9 of the bracket 8 snaps in the clamping catch 10 and each of the hook elements 11 of the base 3 enters a corresponding to it fastening recess 12 of the bottom seat 4 during setting the shell bottom seat 4 on the base 3.

Thanks to such a construction of the chair 1, in the case of high overloading as may occur during sharp braking or collision, the transferred force of inertia (child - belts of the chair 1 (internal shoulder belts, crotch belt and tensioning belt) - base 3 - motor car structure) bypasses the bottom seat 4 of the chair 1 and from the belts of the chair 1 is transferred to the base 3. This shortened path of transfer of the force of inertia, affecting the child during an accident, enhances safety of the child in the chair 1. Moreover, the structure of the bottom seat 4 of the chair 1 is not a system element that provides safety during an accident, and therefore it may be formed of any suitable material such as for example dense Styrofoam that contributes inter alia to low mass of the chair 1 which provides another advantage, i.e. makes it easier to carry a child in the chair 1 outside the motor car and also influences the costs of production of the chair 1. The application in one embodiment in the construction of the chair 1 of a clamping connection (hook fastening element 11 and corresponding fastening recess 12) and clamping (connector 9 and clamping catch 10) makes mounting of the bottom seat 4 to the base 3 of the chair 1 a very easy operation and simultaneously ensures safe connection of the bottom seat on the base 3 of the chair 1. Of course, the application of the clamping catch (a hook fastening element 11 and corresponding to it fastening recess 12) can be replaced by other technical means.

The object of the invention, of course, is not limited to the presented embodiment and numerous modifications thereof within the scope of the patent claims are possible without departing from the scope of the subject-matter of the invention.

## Claims

1. A motor car chair for a child, that can be mounted on a motor car seat, comprising a base with a clamping catch and a shell bottom seat comprising internal belts for a child, said belts having two shoulder segments extending within the space of the bottom seat intended for a child and passing to the other side of the bottom seat and there being linked with a tensioning belt that passes through a tensioner, and in the space of the bottom seat intended for a child a connecting crotch element provided with an internal belt clamp, **characterized in that** the shell bottom seat (4) is provided with a longitudinal bracket (8) extending along the longitudinal axis of the shell of the bottom seat (4), said bracket (8) being provided with a connector (9), into which the connecting crotch element (13) and the tensioner (7) are connected, and wherein the base (3) has at least one clamping catch (10), with which the connector (9) of the bracket (8) is coupled, upon setting the bottom seat (4) in the base (3)

2. A chair according to claim 1, **characterized in that** the connector (9) is set at one end of the bracket (8) and is coupled with the connecting crotch element (13) with a clamp (14) for internal belts (5) of the chair (1), wherein the other end of the bracket (8) is coupled to the tensioner (7) of the tensioning belt (6) of the chair (1).

3. A chair according to claim 1, **characterized in that** the connector (9) is set at one end of the bracket (8) and is coupled with the tensioner (7) of the tensioning belt (6) of the chair (1), wherein the other end of the bracket (8) is coupled with the connecting crotch element (13) with a clamp (14) for the tensioning belt (6) of the chair (1).

4. A chair according to claim 1, **characterized in that** the connector (9) is set between one end of the bracket (8) and the other end of the bracket (8), wherein at one end of the bracket (8) the connecting crotch element (13) with a clamp (14) for internal belts (5) of the chair (1) is positioned, and at the other end of the bracket (8) the tensioner (7) of the tensioning belt (6) of the chair (1) is positioned.

5. A chair according to claim 1, **characterized in that** the connector (9) is set in the bracket (8) and connected to a connecting crotch element (13) with a clamp (14) for the internal belts (5) of the chair (1), wherein the connecting crotch element (13) is set on the common axis with the tensioner (7) of the tensioning belt (6) of the chair (1).

6. A chair according to claim 1, **characterized in that** the base (3) is provided with at least one hook fastening element (11) and the shell bottom seat (4) has at least one fastening recess (12), into which a hook fastening element (11) enters during setting the shell bottom seat (4) in the basis (3).

7. A chair according to claim 1, **characterized in that** the base (3) of the chair (1) is mounted to the motor car seat (2) by means of an isofix system device (22).

8. A chair according to claim 1, **characterized in that** the base (3) of the chair (1) is mounted to the motor car seat (2) by means of the motor car safety belts.

9. A chair according to any of claims 2 to 6, **characterized in that** the connecting crotch element (13) is a belt.

10. A chair according to claim 1, **characterized in that** the clamping catch (10) has a claw element (15) rotatable on a shaft (16) and is released by a spring (17), and the connector (9) has in the cross-section cooperating with a clamping catch (10) a circular shape.

11. A chair according to claim 1, **characterized in that** the base (3) of the chair (1) is provided with longitudinal side channels (18) and the central part thereof at the side corresponding to the backrest of the bottom seat (4) is provided with a protrusion (19) of a cylinder-like shape the axis of which extends transversely to the longitudinal axis of the base (3) and the bottom seat (4) of the chair (1) is provided with longitudinal rails (20) and with a recess (21) of a cylinder-like shape the axis of which extends transversely to the longitudinal axis of the bottom seat (4), wherein the longitudinal rails (20) of the bottom seat (4) enter the channels (18) of the base (3) and the protrusion (19) of the base (3) enters the bottom seat recess (21) during setting the bottom seat (4) in the base (3) of the chair (1).

## Patentansprüche

1. Kraftfahrzeugsitz für ein Kind, der auf einem Autositz montiert werden kann, umfassend eine Basis mit einer Klemmverschluss und einen Schalenbodensitz mit Innengurten für ein Kind, wobei die Gurte zwei Schultersegmente aufweisen, die sich innerhalb des Raums des Bodensitzes erstrecken, der für ein Kind bestimmt ist und zur anderen Seite des Bodensitzes verläuft, und wobei sie dort mit einem Spanngurt verbunden sind, der durch eine Spannvorrichtung verläuft, und im Raum des Bodensitzes, der für ein Kind bestimmt ist, ein Verbindungsschrittelement, das mit einer inneren Gurtklemme versehen ist, **dadurch gekennzeichnet, dass** der Schalenbodensitz (4) mit einer länglichen Halterung (8) versehen ist, die sich entlang der Längsachse der Schale des Bodensitzes (4) erstreckt, wobei die Halterung (8) mit einem Verbinder (9) versehen ist, bei dem das Verbindungsschrittelement (13) und der Spanner (7) verbunden ist, wobei die Basis (3) mindestens eine Klemmverschluss (10) aufweist, mit der der Verbinder (9) der Halterung (8) beim Einsetzen des Bodensitzes (4) in dieBasis (3) gekoppelt ist.

2. Kraftfahrzeugsitz nach Anspruch 1, **dadurch gekennzeichnet, dass** der Verbinder (9) an einem Ende der Halterung (8) eingesetzt und mit einem Verbindungsschrittelement (13) mit einer Klemme (14) für Innengurte (5) des Sitzes (1) gekoppelt ist, wobei das andere Ende der Halterung (8) mit einer Spannvorrichtung (7) des Spanngurtes (6) des Sitzes (1) gekoppelt ist.

3. Kraftfahrzeugsitz nach Anspruch 1, **dadurch gekennzeichnet, dass** der Verbinder (9) an einem Ende der Halterung (8) eingesetzt und mit einer Spannvorrichtung (7) des Spanngurtes (6) des Sitz (1) gekoppelt ist, wobei das andere Ende der Halterung (8) mit dem Verbindungsschrittelement (13) mit einer Klemme (14) für den Spanngurt (6) des Sitzes (1) gekoppelt ist.

4. Kraftfahrzeugsitz nach Anspruch 1, **dadurch gekennzeichnet, dass** der Verbinder (9) zwischen einem Ende der Halterung (8) und dem anderen Ende der Halterung (8) eingesetzt ist, wobei an einem Ende der Halterung (8) ein Verbindungsschrittelement (13) mit einer Klemme (14) für die Innengurten (5) des Sitzes (1) positioniert ist und am anderen Ende der Halterung (8) ein Spanner (7) des Spanngurtes (6) des Sitzes (1) positioniert ist.

5. Kraftfahrzeugsitz nach Anspruch 1, **dadurch gekennzeichnet, dass** der Verbinder (9) in die Halterung (8) eingesetzt und mit einem Verbindungsschrittelement (13) mit einer Klemme (14) für die Innengurte (5) des Sitz (1) verbunden ist, wobei das Verbindungsschrittelement (13) auf die gemeinsame Achse mit dem Spanner (7) des Spanngurtes (6) des Sitz (1) eingesetzt ist.

6. Kraftfahrzeugsitz nach Anspruch 1, **dadurch gekennzeichnet, dass** die Basis (3) mit mindestens einem Hakenbefestigungselement (11) versehen ist und der Schalenbodensitz (4) mindestens eine Befestigungsaussparung (12) aufweist, in die ein Hakenbefestigungselement (11) beim Einsetzen des Schalenbodensitzes (4) in die Basis (3) eintritt.

7. Kraftfahrzeugsitz nach Anspruch 1, **dadurch gekennzeichnet, dass** die Basis (3) des Sitzes (1) mittels einer Isofix-Systemvorrichtung (22) am Kraftwagensitz (2) befestigt ist.

8. Kraftfahrzeugsitz nach Anspruch 1, **dadurch gekennzeichnet, dass** die Basis (3) des Sitzes (1) mittels der Sicherheitsgurte des Kraftwagens am Kraftwagensitz (2) befestigt ist.

9. Kraftfahrzeugsitz nach einer der Anspruche 2 bis 6, **dadurch gekennzeichnet, dass** das Verbindungsschrittelement (13) ein Gurt ist.

10. Kraftfahrzeugsitz nach Anspruch 1, **dadurch gekennzeichnet, dass** die Klemmverschluss (10) ein Klauenelement (15) aufweist, das auf einem Schaft (16) drehbar ist und durch eine Feder (17) gelöst wird, und dass der Verbinder (9) im Querschnitt, der mit einer Klemmverschluss (10) zusammenwirkt, eine kreisförmige Form aufweist.

11. Kraftfahrzeugsitz nach Anspruch 1, **dadurch gekennzeichnet, dass** die Basis (3) des Sitz (1) mit länglichen Kanälen (18) versehen ist und der mittlere Teil davon an der der Rückenlehne des Bodensitzes (4) entsprechenden Seite mit einem Vorsprung (19) in einer zylinderartigen Form versehen ist, dessen Achse sich quer zur Längsachse der Basis (3) erstreckt und der Bodensitz (4) des Sitzes (1) mit Längsschienen (20) und mit einer Aussparung (21) in einer zylinderartigen Form versehen ist, deren Achse sich quer zur Längsachse des Bodensitzes (4) erstreckt, wobei die Längsschienen (20) des Bodensitzes (4) in die Kanäle (18) der Basis (3) eintreten und der Vorsprung (19) der Basis (3) in die untere Sitzaussparung (21) eintritt, während der Bodensitz (4) in die Basis (3) des Sitz (1) eingesetzt wird.

## Revendications

1. Chaise de voiture automobile pour un enfant, qui peut être monté sur un siège de voiture automobile, comprenant une base avec un cliquet de serrage et un siège de fond de coque comprenant des ceintures internes pour un enfant, lesdites ceintures ayant deux segments d'épaule s'étendant dans l'espace du siège inférieur destiné à un enfant et passant de l'autre côté du siège inférieur et étant reliées par une ceinture tendeur qui traverse un dispositif de tension, et dans l'espace du siège inférieur destiné à un enfant, un élément d'entrejambe de liaison muni d'une pince de ceinture interne, **caractérisé en ce que** le siège inférieur de coque (4) est muni d'un support longitudinal (8) s'étendant le long de l'axe longitudinal de la coque du siège inférieur (4), ledit support (8) étant pourvu d'un connecteur (9), aulequel sont connectés l'élément d'entrejambe de liaison (13) et le tendeur (7), et où la base (3) comporte au moins un cliquet (10), auquel est couplé le connecteur (9) du support (8), en fixant le siège inférieur (4) dans la base (3)

2. Chaise selon la revendication 1, **caractérisée en ce que** le connecteur (9) est fixé à une extrémité du support (8) et est couplé à un élément d'entrejambe de liaison (13) avec une pince (14) pour courroies internes (5) de la chaise (1), l'autre extrémité du support (8) étant reliée à un tendeur (7) de la courroie (6) de la chaise (1).

3. Chaise selon la revendication 1, **caractérisée en ce que** le connecteur (9) est fixé à une extrémité du support (8) et est couplé à un tendeur (7) de la courroie de tension (6) de la chaise (1), l'autre extrémité du support (8) étant couplée avec l'élément d'entrejambe (13) avec une pince (14) de la courroie de tension (6) de la chaise (1).

4. Chaise selon la revendication 1, **caractérisée en ce que** le connecteur (9) est placé entre une extrémité du support (8) et l'autre extrémité du support (8), dans laquelle, à une extrémité du support (8), un élément d'entrejambe de liaison (13) avec une pince (14) pour courroies internes (5) de la chaise (1) est placé, et à l'autre extrémité du support (8) un dispositif tendeur (7) de la courroie tendue (6) de la chaise (1) est placé.

5. Chaise selon la revendication 1, **caractérisée en ce que** le connecteur (9) est placé dans le support (8) et relié à un élément d'entrejambe de liaison (13) avec une pince (14) pour les courroies internes (5) de la chaise (1), l'élément d'entrejambe de liaison (13) étant placé sur l'axe commun avec le tendeur (7) de la courroie tendeuse (6) de la chaise (1).

6. Chaise selon la revendication 1, **caractérisée en ce que** la base (3) est munie d'au moins un élément de fixation à crochet (11) et le siège inférieur de coque (4) présente au moins un décrochement de fixation (12), dans lequel un élément de fixation à crochet (11) entre pendant le réglage du siège inférieur de coque (4) dans la base (3).

7. Chaise selon la revendication 1, **caractérisé en ce que** la base (3) du siège (1) est montée sur le siège (2) de la voiture automobile au moyen d'un système isofix (22).

8. Chaise selon la revendication 1, **caractérisé en ce que** la base (3) du siège (1) est montée sur le siège (2) de la voiture automobile au moyen des ceintures de sécurité de la voiture automobile.

9. Chaise selon l'une quelconque des revendications 2 à 6, **caractérisée en ce que** l'élément d'entrejambe de liaison (13) est une ceinture.

10. Chaise selon la revendication 1, **caractérisée en ce que** le dispositif de serrage (10) présente un élément à griffes (15) pouvant tourner sur un arbre (16) et qui est libéré par un ressort (17), et le connecteur (9) a une forme circulaire dans sa section transversale coopérant avec un dispositif de serrage (10).

11. Chaise selon la revendication 1, **caractérisé en ce que** la base (3) de la chaise (1) est munie de canaux latéraux longitudinaux (18) et sa partie centrale sur le côté correspondant au dossier du siège inférieur (4) est munie d'une saillie (19) de forme cylindrique dont l'axe s'étend transversalement à l'axe longitudinal de la base (3) et le siège inférieur (4) de la chaise (1) est pourvu de rails longitudinaux (20) et avec un décrochement (21) de forme cylindrique dont l'axe s'étend transversalement à l'axe longitudinal du siège inférieur (4), dans laquelle les rails longitudinaux (20) du siège inférieur (4) pénètrent dans les canaux (18) de la base (3) et la saillie (19) de la base (3) pénètre dans le décrochement inférieur (21) du siège pendant le réglage du siège inférieur (4) dans la base (3) de la chaise (1).
